Europäisches Patentamt

European Patent Office

Office européen des brevets

(19)

(11) Numéro de publication : **0 041 422**
**B1**

(12) **FASCICULE DE BREVET EUROPÉEN**

(45) Date de publication du fascicule du brevet :
07.12.83

(51) Int. Cl.³ : **C 05 F   9/00**

(21) Numéro de dépôt : **81400744.9**

(22) Date de dépôt : **11.05.81**

(54) **Procédé et installation pour la préparation des ordures ménagères en vue de la production de compost.**

(30) Priorité : **30.05.80 FR 8012009**

(43) Date de publication de la demande :
**09.12.81 Bulletin 81/49**

(45) Mention de la délivrance du brevet :
**07.12.83 Bulletin 83/49**

(84) Etats contractants désignés :
**AT BE CH DE GB IT LI LU NL SE**

(56) Documents cités :
**AU-A-   416 771**
**BE-A-   413 781**
**US-A- 3 524 594**
**US-A- 3 579 320**
**US-A- 3 604 179**

(73) Titulaire : **APPAREILS DRAGON, Société Anonyme**
**Boîte Postale no. 11**
**F-38600 Fontaine (FR)**

(72) Inventeur : **Ardouin, Guy**
**4, Boulevard du Maréchal Joffre**
**F-38000 Grenoble (FR)**

(74) Mandataire : **Fontanié, Etienne**
**FIVES-CAIL BABCOCK 7, rue Montalivet**
**F-75383 Paris Cedex 08 (FR)**

Jouve, 18, rue St-Denis, 75001 Paris, France

Procédé et installation pour la préparation des ordures ménagères en vue de la production de compost

Les composts obtenus à partir des ordures ménagères contiennent des éléments coupants et piquants de petites dimensions, tels que des bouts de verre qui sont gênants pour leur utilisation.

La séparation par criblage de ces éléments est impossible car le compost est un produit humide et collant et les cribles dont les orifices sont trop petits se colmatent très rapidement.

Il est connu de séparer les morceaux de verre et les autres produits lourds contenus dans les ordures ménagères par tri pneumatique. Mais on sait que ce procédé de tri n'est efficace que si l'écat entre les dimensions des plus fines particules et des plus gros morceaux n'est pas trop important, ce qui n'est pas le cas des ordures ménagères. C'est pourquoi ce procédé ne permet pas d'éliminer les éléments mentionnés plus haut.

Le but de la présente invention est d'éliminer des ordures ménagères qui doivent être utilisées pour la préparation du compost les éléments coupants et piquants de petites dimensions qui ne peuvent pas être séparés par un tri pneumatique classique.

L'invention a pour objet un procédé de préparation des ordures ménagères en vue de la production d'un compost consistant à broyer les ordures, à les séparer par criblage en deux fractions à granulométries différentes et à soumettre la fraction à plus petite granulométrie à un second criblage, pour éliminer les particules les plus fines, puis à un tri pneumatique pour séparer les produits lourds des produits légers qui sont utilisés pour produire du compost.

Le second criblage permet d'éliminer les éléments coupants et piquants de très petites dimensions et le tri pneumatique les éléments lourds plus gros, de sorte que la fraction légère envoyée au compostage ne contient plus du tout de verre ou d'autres éléments de même nature. La dimension des ouvertures du second crible est choisie pour permettre un tri pneumatique efficace et éviter un rejet trop important de matières compostables ; si cette dimension est convenablement choisie, ce rejet sera faible et de l'ordre de 5 % du poids total des ordures. De préférence, les dimensions des particules éliminées par le second criblage seront inférieures à 5 mm, selon la nature des ordures et la qualité recherchée pour le produit compostable.

La fraction à plus grosse granulométrie provenant du premier criblage peut être également utilisée pour la production de compost, en totalité ou en partie ; elle peut aussi être utilisée à d'autres fins, par exemple pour la production de combustible. La dimension des ouvertures du premier crible est choisie pour que cette franction ne contienne pas d'éléments lourds ; elle sera de préférence comprise entre 8 et 25 mm.

Après broyage et avant le premier criblage, les ordures sont avantageusement soumises à une séparation magnétique.

Avant d'être soumis au tri pneumatique, les refus du second criblage sont chargés sur un support plan, déplacés sur ce support en une couche d'épaisseur sensiblement uniforme et soumis pendant leur déplacement à des vibrations et/ou à des jets d'air pour classer les éléments constituant ces refus en couches superposées, suivant leurs densités. A l'extrémité de déchargement de ce support, les ordures tombent en chute libre et pendant leur chute elles sont soumises à l'action d'au moins un courant d'air qui traverse le jet d'ordures en rencontrant d'abord la veine des éléments les plus denses. Le jet d'ordures peut être traversé successivement par plusieurs courants d'air établis à différents niveaux. Ces courants d'air peuvent avoir un débit variable périodiquement ; leur direction peut aussi être modifiée périodiquement à partir d'une position moyenne.

L'invention a également pour objet une installation pour la préparation des ordures ménagères en vue de la production de compost comportant un broyeur, un premier crible, un second crible recevant les produits ayant traversé le premier crible et dont les ouvertures sont inférieures à 5 mm, une table vibrante recevant les refus du second crible et un trieur pneumatique comportant au moins une buse de soufflage placée sous l'extrémité de déchargement de la table vibrante et agencée pour produire un courant d'air traversant le jet des produits tombant de ladite table.

Les cribles sont avantageusement constitués par des tambours rotatifs. La table vibrante peut être constituée par un support perméable sous lequel sont installées des boîtes de soufflage d'air. Le soufflage d'air à travers la couche de produits se trouvant sur la table crée une dilatation de la couche et une agitation qui favorise le classement des produits suivant leur densité.

Dans le trieur pneumatique, le jet des produits tombant de la table vibrante est divisé en une veine de produits lourds et une veine de produits légers qui sont recueillies séparément. Suivant un mode de réalisation préféré, les deux veines sont recueillies sur deux transporteurs placés tête-à-tête et dont les sens de transport sont opposés, et un couteau placé au-dessus des têtes des transporteurs assure une séparation franche des deux veines. L'ensemble constitué par les deux transporteurs et le couteau est déplaçable dans une direction horizontale et perpendiculaire à l'arrête du couteau et permet de régler la position du couteau et d'optimiser la séparation, suivant la nature des ordures.

L'ensemble constitué par le trieur pneumatique, la table vibrante et éventuellement le second crible est enfermé dans une enveloppe raccordée à une cheminée à travers un dispositif de dépoussiérage.

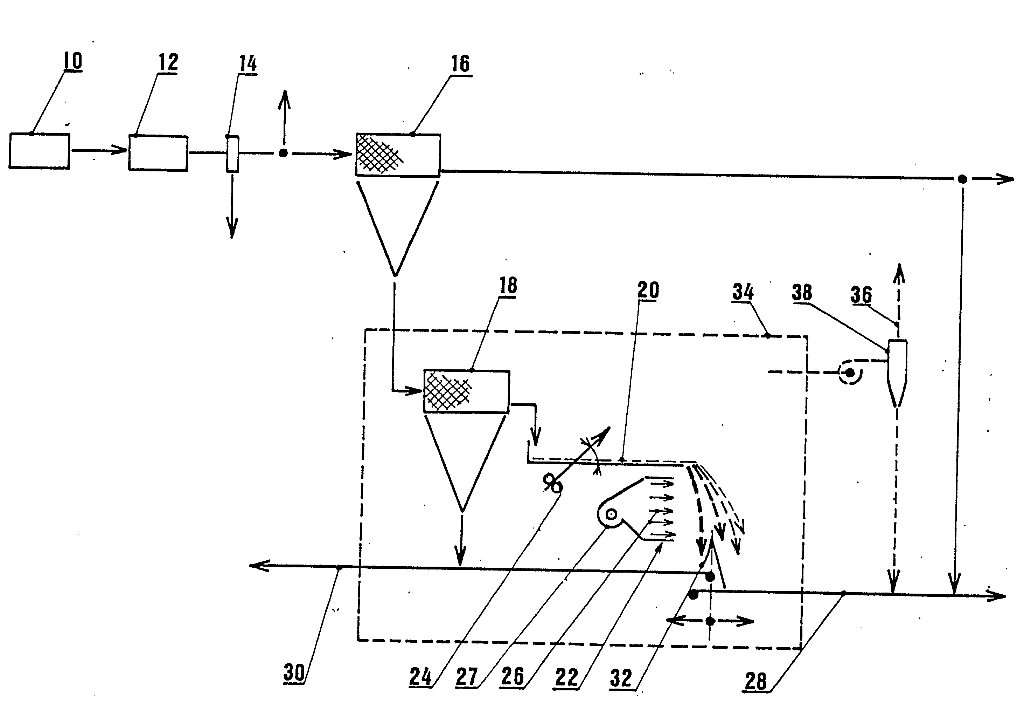

D'autres caractéristiques de l'invention apparaîtront à la lecture de la description qui suit et se réfère au dessin l'accompagnant qui est le schéma d'une installation réalisée conformément à l'invention.

Cette installation comprend essentiellement une fosse de réception des ordures 10, un broyeur à marteaux 12, un séparateur magnétique 14 servant à éliminer les ferrailles, deux cribles 16 et 18, une table vibrante 20 et un trieur pneumatique 22.

Les cribles 16 et 18 sont des tambours rotatifs éventuellement munis de brosses et de rampes de soufflage pour nettoyer les ouvertures et éviter leur colmatage.

La table vibrante 20 est constituée par une auge horizontale ou légèrement inclinée sur laquelle sont fixés des vibrateurs 24. La direction, l'amplitude et la fréquence des vibrations communiquées à la table sont réglables. La table vibrante constitue un transporteur dont l'extrémité amont reçoit les refus du crible 18 qui sont déchargés, à son extrémité aval, dans le trieur pneumatique 22.

Le trieur 22 comprend des buses plates 26 placées sous l'extrémité de déchargement de la table vibrante 20 et agencées pour souffler de l'air comprimé fourni par un ventilateur 27 sur le jet des produits tombant de la table. Ces buses sont disposées à plusieurs niveaux et s'étendent sur toute la largeur du jet de produits ; en variante, plusieurs buses peuvent être placées côte-à-côte à chaque niveau.

Le trieur 22 comprend également deux transporteurs 28 et 30, par exemple à bande, qui sont placés tête-à-tête et dont les sens de déplacement sont opposés. Un couteau 32 est placé au-dessus de la tête des transporteurs ; il a pour rôle d'assurer une coupure nette entre les deux veines de produits légers et lourds qui tombent sur les transporteurs 28 et 30, respectivement.

Les deux transporteurs 28 et 30 et le couteau 32 sont portés par un châssis monté sur roues ou sur patins et déplaçable suivant l'axe longitudinal des transporteurs, c'est-à-dire perpendiculairement à l'arête du couteau 32. On peut ainsi positionner le couteau, suivant la nature des ordures, pour réaliser une séparation optimale.

L'ensemble constitué par le crible 18, la table vibrante 20 et le trieur pneumatique 22 est enfermé dans une enveloppe 34 raccordée à une cheminée 36 à travers un filtre de dépoussiérage 38.

Dans le broyeur 12, les ordures sont réduites en morceaux, dont les dimensions sont par exemple inférieures à 50 mm, à l'exception de quelques feuilles de papier ou de matière plastique et quelques chiffons. Après avoir éliminé les ferrailles dans le séparateur 14, les ordures sont triées dans le crible 16 et séparées en deux fractions. Les refus peuvent être dirigés vers l'aire de compostage avec les éléments épurés provenant du trieur pneumatique ou vers une installation pour la préparation de combustible ou toute autre utilisation.

Les produits passant à travers les ouvertures du crible 16 sont dirigés vers le crible 18. La dimension des ouvertures du crible 16 est choisie pour que pratiquement tous les produits lourds et notamment tous les morceaux de verre passent à travers celles-ci ; cette dimension variera dans la plupart des cas entre 8 et 25 mm.

La dimension des ouvertures du crible 18 est comprise entre 2 et 5 mm ; cette dimension est choisie pour que les éléments coupants et piquants de petites dimensions, notamment les morceaux de verre, qui ne pourraient pas être séparés pneumatiqument soient éliminés et que le volume de produits compostables rejeté ne soit pas trop important.

Les dimensions des ouvertures des cribles 16 et 18 dépendent de la nature des ordures broyées et de la qualité recherchée pour le produit compostable.

Les refus du crible 18 sont chargés sur la table vibrante 20, à son extrémité amont. Sous l'action des vibrations, les ordures se répartissent sur toute la largeur de la table et se déplacent en une couche d'épaisseur uniforme jusqu'à son extrémité inférieure. Les vibrations ont aussi pour effet d'assurer le classement des produits selon leur densité, les produits les plus denses formant une couche inférieure sur la table, tandis que les produits les moins denses se concentrent dans une couche supérieure.

Ce classement peut être amélioré en soufflant de l'air à travers le fond de la table vibrante, qui est alors constitué par une tôle perforée ou par des plaques d'un matériau poreux. Le soufflage d'air comprimé crée une agitation et une dilatation de la couche d'ordures qui favorise la ségrégation et la désagrégation des produits agglomérés. Il permet, en plus, de retourner les produits plats, tels que feuilles de papier ou de matière plastique, qui ont tendance à glisser sur la table vibrante en transportant des produits plus fins qui échappent ainsi à l'action de classement.

Le jet des produits tombant par gravité à l'extrémité inférieure de la table vibrante est soumis à l'action des courants d'air émis par les buses 26. Ces courants d'air rencontrent d'abord la veine des produits lourds, qui constituaient la couche inférieure sur la table vibrante, puis la veine des produits légers. La veine des produits lourds contenant notamment du verre et des métaux non ferreux n'est pratiquement pas déviée par les courants d'air et ceux-ci tombent sur le transporteur 30 qui les évacue vers une aire de stockage ou un poste de tri ; les produits fins passant à travers le crible 18 sont également chargés sur le transporteur 30 et évacués par celui-ci.

La veine des produits légers est déviée par les courants d'air et tombe sur le transporteur 28 qui évacue ces produits vers l'aire de compostage avec les refus du crible 16. En traversant la veine des produits lourds, les courants d'air entraînent les produits légers qui s'y trouvent mêlés et complètent la séparation commencée sur la table vibrante. En réglant le débit et la pression d'alimentation des buses et éventuellement en choisissant convenablement leur position et leur orientation et la position du couteau 32, déplaçable avec les transporteurs 28 et 30, on élimine tous les produits lourds et notamment les morceaux de verre avec une perte minimale de produits compostables.

Dans certains cas, l'efficacité du trieur pneumatique peut être améliorée en faisant varier périodiquement le débit d'alimentation des buses, pour produire des jets d'air pulsés et/ou en faisant osciller les buses de part et d'autre d'une position moyenne.

Après avoir traversé les veines des produits à trier, l'air est rejeté à l'atmosphère, par la cheminée 36, après avoir été dépoussiéré dans le filtre 38. Les fines recueillies dans le filtre sont dirigées vers l'aire de compostage.

**Revendications**

1. Procédé de préparation des ordures ménagères en vue de la production de compost consistant à broyer les ordures (12), à les séparer par criblage (16) en deux fractions à granulométries différentes et à les soumettre à un tri pneumatique (22) pour séparer les produits lourds des produits légers, caractérisé en ce que la fraction à plus petite granulométrie provenant du premier criblage (16) est soumise à un second criblage (18), pour éliminer les particules les plus fines, puis à un tri pneumatique (22) pour séparer les produits lourds des produits légers qui sont utilisés pour la production du compost.

2. Procédé selon la revendication 1, caractérisé en ce que le second criblage (18) permet d'éliminer les particules dont les dimensions sont inférieures à 5 mm.

3. Procédé selon la revendication 1 ou 2, caractérisé en ce que la fraction à plus grosse granulométrie provenant du premier criblage (16) est utilisée, en totalité ou en partie, pour la production du compost.

4. Procédé selon la revendication 1, 2 ou 3, caractérisé en ce que la coupure entre les deux fractions séparées par le premier criblage est comprise entre 8 et 25 mm.

5. Procédé selon l'une quelconque des revendications 1 à 4, caractérisé en ce que les ordures sont soumises à une séparation magnétique (14) après le broyage (12) et avant le premier criblage (16).

6. Procédé selon l'une quelconque des revendications précédentes, caractérisé en ce que, après le second criblage (18), les produits devant être soumis au tri pneumatique (22) sont chargés sur un support plan (20), déplacés sur ce support en une couche d'épaisseur sensiblement uniforme, et soumis pendant leur déplacement à des vibrations et/ou à des jets d'air pour classer les produits en couches superposées, suivant leurs densités.

7. Procédé selon la revendication 6, caractérisé en ce que le tri pneumatique (22) est effectué sur le jet des produits tombant dudit support (20), à son extrémité de déchargement, au moyen d'au moins un courant d'air qui rencontre d'abord la veine des produits les plus denses.

8. Procédé selon la revendication 7, caractérisé en ce que le jet des produits tombant dudit support (20) est soumis successivement à plusieurs courants d'air établis à des niveaux différents.

9. Procédé selon la revendication 7 ou 8, caractérisé en ce que le ou les courants d'air ont un débit et/ou une orientation variables périodiquement.

10. Installation pour la préparation des ordures ménagères en vue de la production de compost comportant un broyeur (12), un premier crible (16), et un trieur pneumatique (22), caractérisée en ce qu'elle comporte en outre un second crible (18) recevant les produits ayant traversé le premier crible et dont les ouvertures sont inférieures à 5 mm, et une table vibrante (20) recevant les refus du second crible et en ce que le trieur pneumatique (22) comporte au moins une buse de soufflage (26) placée sous l'extrémité de déchargement de la table vibrante et agencée pour produire un courant d'air traversant le jet des produits tombant de ladite table.

11. Installation selon la revendication 10, caractérisée en ce que la table vibrante (20) comporte des moyens pour souffler de l'air de bas en haut à travers la couche des produits qu'elle supporte.

12. Installation selon la revendication 10 ou 11, caractérisée en ce que le trieur pneumatique (22) comporte deux zones de réception (28, 30) des veines de produits lourds et légers et un couteau (32) séparant ces deux zones, et en ce que le couteau et les deux zones font partie d'un ensemble déplaçable dans une direction perpendiculaire à l'arête du couteau.

**Claims**

1. Process for preparing household garbage to make compost which consists in grinding the garbage (12), separating it by screening (16) into two portions of different particle sizes and subjecting it to a pneumatic sorting (22) in order to separate the heavy products from the light ones, characterized by the fact that the portion with the smallest particle size from the first screening (16) undergoes a second screening (18) to eliminate the finest particles, then pneumatic sorting (22) to separate the heavy products from the light ones which are used to make compost.

2. Process as in claim 1, characterized by the fact that the second screening (18) allows the elimination of the particles of less than 5 mm in size.

3. Process as in claim 1 or 2, characterized by the fact that the portion with the largest particle size from the first screening (16) is used, wholly or partly, to make the compost.

4. Process as in claim 1, 2 or 3, characterized by the fact that the cut-off point between the two portions separated by the first screening is between 8 and 25 mm.

5. Process as in any one of claims 1 to 4, characterized by the fact that the garbage is subjected to a magnetic separation (14) after the grinding (12) and before the first screening (16).

6. Process as in any one of the preceding claims, characterized by the fact that after the second screening (18) the products which are to undergo pneumatic sorting (22) are put on a plane support (20) and carried along this support in a layer of uniform thickness, and subjected, as they travel, to vibrations and/or air jets in order to sort the products into superposed layers according to their densities.

7. Process as in claim 6, characterized by the fact that the jet of products falling from the aforesaid support (20) at the discharge end thereof undergoes pneumatic sorting (22), by means of at least one air current which meets the stream of the densest products first of all.

8. Process as in claim 7, characterized by the fact that the jet of products falling from the said support (20) is successively subjected to several air currents at different levels.

9. Process as in claim 7 or 8, characterized by the fact that the or each current of air has a flowrate and/or a direction which can be periodically altered.

10. Installation for preparing household garbage to make compost including a grinding mill (12), a first screen (16) and a pneumatic sorter (22), characterized by the fact that it also includes a second screen (18) which receives the products which have gone through the first screen and whose meshes are smaller than 5 mm, and a vibrating table (20) which receives the oversizes from the second screen, and by the fact that the pneumatic sorter (22) includes at least one blowing nozzle (26) situated at the discharge end of the vibrating table and arranged so that the air current produced crosses the jet of products falling from the aforesaid table.

11. Installation as in claim 10, characterized by the fact that the vibrating table (20) includes means for blowing air from the bottom to the top across the layer of products it supports.

12. Installation as in claim 10 or 11, characterized by the fact that pneumatic sorter (22) includes two receiving areas (28, 30) for the streams of heavy and light products and a dividing member (32) separating these two areas, and by the fact that the dividing member and the areas form part of a unit which can be moved in a direction perpendicular to the edge of the dividing member.

**Ansprüche**

1. Verfahren zur Behandlung von Hausmüll für die Kompostbereitung, bestehend darin, das Hausmüll zu mahlen (12), es in zwei Fraktionen mit unterschiedenen Korngrössen durch Sieben zu trennen (16) und es einer Magnetscheidung (22) zu unterziehen, um das Schwergut von dem Leichtgut zu trennen, dadurch gekennzeichnet, dass die Fraktion mit kleinerer Korngrösse aus dem ersten Siebvorgang (16) einem zweiten Siebvorgang (18) unterzogen wird, um die feinsten Partikeln auszuscheiden, und dann einem Luftklassierung (22) um das Schwergut von dem Leichtgut, das für die Kompostbereitung verwendet wird, zu trennen.

2. Verfahren nach Anspruch 1, dadurch gekennzeichnet, dass der zweite Siebvorgang (18) es ermöglicht, die Partikeln mit Korngrössen unter 5 mm auszuscheiden.

3. Verfahren nach Anspruch 1 oder 2, dadurch gekennzeichnet, dass die Fraktion mit grösserer Korngrösse aus dem ersten Siebvorgang (16) in ganzen oder teilweise für die Kompostbereitung verwendet wird.

4. Verfahren nach Anspruch 1, 2 oder 3, dadurch gekennzeichnet, dass der Trennschnitt zwischen den beiden durch den ersten Siebvorgang getrennten Fraktionen zwischen 8 und 25 mm liegt.

5. Verfahren nach irgendeinem der Ansprüche 1 bis 4, dadurch gekennzeichnet, dass das Hausmüll nach dem Mahlen (12) und vor dem ersten Siebvorgang (16) einer Magnetscheidung (14) unterzogen wird.

6. Verfahren nach irgendeinem der verstehenden Ansprüche, dadurch gekennzeichnet, dass nach dem zweiten Siebvorgang (18) das dem Luftklassieren zu unterziehende Gut auf eine ebene Auflage (20) geladen wird, auf dieser Auflage in einer Schicht von ungefähr gleichmässiger Dicke versetzt wird, und während seiner Versetzung Schwingungen und/oder Luftstrahlen ausgesetzt wird, um das Gut in übereinanderliegenden Schichten je nach dessen Schüttgewicht zu klassieren.

7. Verfahren nach Anspruch 6, dadurch gekennzeichnet, dass das Luftklassieren (22) im Strahl des aus der Auflage (20) fallenden Gute, am Austragende, mit Hilfe von mindestens eines Luftstroms erfolgt, der die Ader des schwersten Gutes zuerst trifft.

8. Verfahren nach Anspruch 7, dadurch gekennzeichnet, dass der Strahl des aus der Auflage (20) fallenden Gutes nacheinander mehreren auf verschiedenen Ebenen liegenden Luftströmen ausgesetzt wird.

9. Verfahren nach Anspruch 7 oder 8, dadurch gekennzeichnet, dass der oder die Luftströme in der Menge und/oder in der Richtung periodisch einstellbar sind.

10. Einrichtung zur Behandlung von Hausmüll für die Kompostbereitung, bestehend aus einer Mühle (12), einem ersten Sieb (16) und einem Luftklassierer (22), dadurch gekennzeichnet, dass sie ausserdem ein zweites Sieb (18) umfasst, das das Gut nach seinem Durchgang durch das erste Sieb aufnimmt, und dessen Maschenweite kleiner als 5 mm ist, sowie einen Rütteltisch (20), der den Rückstand des zweiten Siebes aufnimmt, und dass der Luftklassierer (22) mit mindestens einer unter dem Austragende des Rütteltisches liegenden Blasdüse versehen ist, die so angeordnet ist, dass sie einen durch den Strahl des aus dem Tisch (20) fallenden Gutes durchgehenden Luftstrom erzeugt.

11. Einrichtung nach Anspruch 10, dadurch gekennzeichnet, dass der Rütelltisch (20) mit Mitteln zur Lufeinblasung von unten nach oben durch die von ihm getragene Gutschicht versehen ist.

12. Einrichtung nach Anspruch 10 oder 11, dadurch gekennzeichnet, dass der Luftklassierer (22) zwei Aufnahmezonen (28, 30) für die Adern von Schwer — und Leichtgut sowie ein Messer (32) umfasst, das diese beiden Zonen trennt, und dass das Messer und die beiden Zonen zu einem in einer zur Messerkante senkrechten Richtung verfahrbaren Satz gehören.

10 12 14 16 18 20 34 38 36 30 24 27 26 22 32 28

0 041 422